# EUROPEAN PATENT SPECIFICATION

(11) **EP 4 362 509 B1**
(45) Date of publication and mention of the grant of the patent: **08.04.2026**
(21) Application number: 23199427.8
(22) Date of filing: 25.09.2023
(51) Int. Cl.: H04W 4/44

(54) **INFORMATION PROCESSING DEVICE, METHOD, AND NON-TRANSITORY STORAGE MEDIUM**
INFORMATIONSVERARBEITUNGSVORRICHTUNG, VERFAHREN UND NICHTTRANSITORISCHES SPEICHERMEDIUM
DISPOSITIF DE TRAITEMENT D'INFORMATIONS, PROCÉDÉ ET SUPPORT D'INFORMATIONS NON TRANSITOIRE

(30) Priority: 27.10.2022 JP 2022172116
(43) Date of publication of application: 01.05.2024
(73) Proprietor: TOYOTA JIDOSHA KABUSHIKI KAISHA, Toyota-shi, Aichi-ken, 471-8571 (JP)
(72) Inventor: YOSHIDA, Kaoru, Toyota-shi, 471-8571 (JP); OKUDA, Masataka, Toyota-shi, 471-8571 (JP); KAKUTANI, Masatoshi, Toyota-shi, 471-8571 (JP); SHINOHARA, Toshiki, Toyota-shi, 471-8571 (JP); KURIYAMA, Kanade, Toyota-shi, 471-8571 (JP)
(74) Representative: J A Kemp LLP

(56) References cited:
- EP-A1- 4 020 935
- US-A1- 2021 168 190

## Description

### BACKGROUND OF THE INVENTION

### 1. Field of the Invention

The present disclosure relates to an information processing device, a method, and a non-transitory storage medium that communicate with an external service provider.

### 2. Description of Related Art

Japanese Unexamined Patent Application Publication No. 2019-505059 (JP 2019-505059 A) discloses an autonomous vehicle service platform connected to a plurality of autonomous vehicles that autonomously drives on a road network via a network to be able to communicate with each other. The autonomous vehicle service platform remotely controls the autonomous vehicles and provides a user with various services using the autonomous vehicle. EP 4 020 935 A1 discloses a transport operator collaboration system. US 2021/168190 A1 discloses a communication device, user terminal, communication system, controlling method of the same, and program.

### SUMMARY OF THE INVENTION

In a case of an external service that performs remote driving control of a vehicle, a delay or an interruption in communication between the external service provider and the vehicle that is the external service destination may affect the execution of the external service. Therefore, there is room for further improvement in a method of providing an external service that takes communication quality into account, including a delay or an interruption between the external service provider and the external service destination.

An object of the present disclosure is to provide an information processing device, a method, and a non-transitory storage medium that can provide an external service provider with information that contributes to allowing the external service provider to suitably control the external service destination based on the communication quality.

A first aspect of the present disclosure is an information processing device configured to communicate with an external service provider. The external service provider is configured to communicate with and provide an external service to an external service destination that is different from the information processing device. The information processing device includes a reception unit configured to receive a request regarding communication quality necessary for executing the external service from the external service provider, the communication quality necessary being communication quality necessary between the external service provider and the external service destination, an acquisition unit configured to acquire, from a predetermined database, information on the communication quality necessary for executing the external service based on the request received by the reception unit, and a transmission unit configured to transmit the information acquired by the acquisition unit to the external service provider.

In the first aspect, an arbitration unit may further be included. The information processing device may be configured to communicate with a plurality of the external service providers. Each of the external service providers may be configure to i) provide the external service and ii) transmit the request to the information processing device. The external services respectively provided by the external service providers may be different from each other. The reception unit may be configured to receive each of the requests from the external service providers. The arbitration unit may be configured to arbitrate, based on categories of the external services, the requests received by the reception unit.

In the first aspect, the request may be a request regarding communication quality between the external service provider and an external service destination in a predetermined region. The external service destination may be configured to receive the external service.

In the first aspect, the external service may be manual remote driving of a vehicle by an operator, the external service provider may be an operation center that instructs the vehicle to be driven remotely, and the transmission unit may be configured to transmit, to the operation center, information used for determining display of a predicted travel track along which the vehicle travels.

In the first aspect, the external service may be autonomous remote driving of a vehicle by an application; the external service provider may be an application server that instructs the vehicle to be driven remotely; and the transmission unit may be configured to transmit, to the application, information used for determining an amount of data transmitted to and received from the vehicle.

In the first aspect, the external service provider may be a user or a provider of the external service; and the transmission unit may be configured to transmit, to the user or the provider, information used for evaluation when the external service is used or for determination of whether the external service is provided.

A second aspect of the present disclosure is a method executed by a computer of an information processing device that communicates with an external service provider. The external service provider is configured to communicate with and provide an external service to an external service destination that is different from the information processing device. The method includes receiving a request regarding communication quality necessary for executing the external service from the external service provider, the communication quality necessary being communication quality necessary between the external service provider and the external service destination, acquiring, from a predetermined database, information on the communication quality necessary for executing the external service based on the request; and transmitting the information to the external service provider.

A third aspect of the present disclosure is a non-transitory storage medium storing instructions that are executable by one or more processors included in a computer of an information processing device that communicates with an external service provider configured to communicate with and provide an external service to an external service destination that is different from the information processing device, and that cause the one or more processors to execute functions below. The functions include receiving a request regarding communication quality necessary for executing the external service from the external service provider, the communication quality necessary being communication quality necessary between the external service provider and the external service destination, acquiring, from a predetermined database, information on the communication quality necessary for executing the external service based on the request, and transmitting the information to the external service provider.

According to the first aspect, the second aspect, and the third aspect of the present disclosure, since information on communication quality necessary for executing the external service is transmitted in response to the request from the external service provider of the external service, it is possible to suitably control the external service destination based on the communication quality by the external service provider.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic configuration diagram of a system including an information processing device according to an embodiment of the present disclosure;
FIG. 2 is a processing sequence of external service control (first example);
FIG. 3 is a processing sequence of external service control (second example);
FIG. 4 is a processing sequence of external service control (third example);
FIG. 5A is an example of an image of utilizing a result of communication quality at a remote driving center;
FIG. 5B is an example of an image of utilizing a result of the communication quality at the remote driving center; and
FIG. 6 is an example of a result of communication quality with respect to the granularity of information requested by an external service provider.

### DETAILED DESCRIPTION OF EMBODIMENTS

When an information processing device of the present disclosure receives a request regarding communication quality necessary for executing an external service from an external service provider, the information processing device acquires communication quality information necessary for executing the external service in response to the request from a communication quality map database, and transmits the communication quality information to the external service provider. As a result, the external service provider that has received the communication quality information can suitably control an external service destination based on the communication quality information. Hereinafter, an embodiment of the present disclosure will be described in detail with reference to the drawings.

### Embodiment

### Configuration

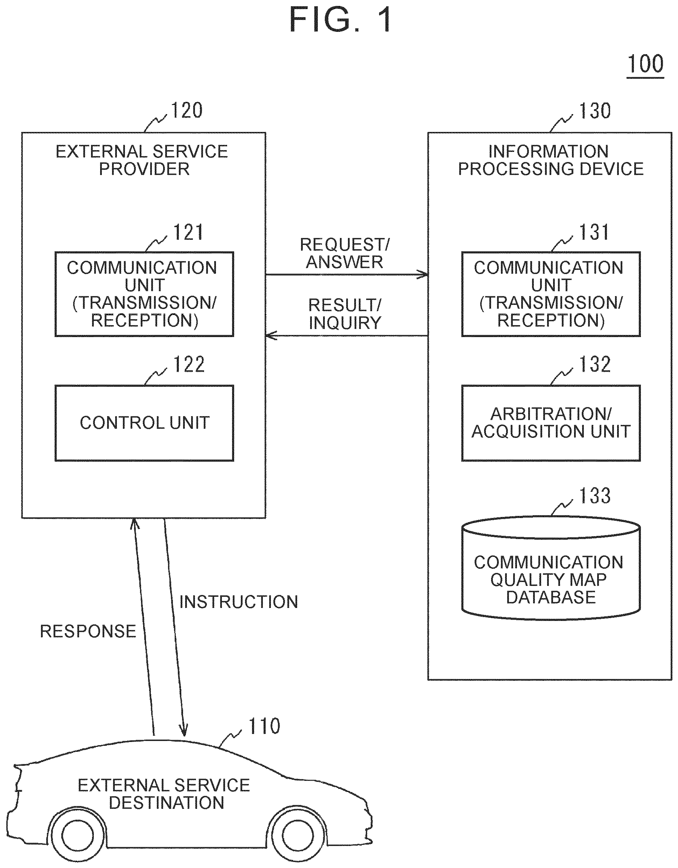

FIG. 1 is a schematic diagram showing an overall configuration example of a system 100 including an information processing device 130 according to the embodiment of the present disclosure. The system 100 illustrated in FIG. 1 is configured to include an external service destination 110, an external service provider 120, and an information processing device 130.

### (1) External Service Destination

The external service destination 110 is configured to be able to communicate with the external service provider 120 and receive the external service from the external service provider 120. Mobility such as a vehicle can be shown as an example of the external service destination 110. Further, the external service destination 110 can transmit a response regarding the received external service to the external service provider 120. Note that the number of the external service destinations 110 communicating with the external service provider 120 is not limited to one.

### (2) External Service Provider

The external service provider 120 is a configuration for communicating with the external service destination 110 and providing the predetermined external service to the external service destination 110. Further, the external service provider 120 can communicate with the information processing device 130 and acquire information necessary for executing the external service from the information processing device 130. The external service provider 120 includes a communication unit 121 and a control unit 122.

The communication unit 121 transmits (transmission unit) and receives (reception unit) predetermined data and information between the external service destination 110 and the information processing device 130. The communication unit 121 transmits, to the external service destination 110, an instruction, etc. regarding an operation necessary for providing the external service, and receives a response, etc. regarding behavior in response to the instruction from the external service destination 110. Further, the communication unit 121 transmits, to the information processing device 130, a request for acquisition of information on communication quality necessary for executing the external service, and as a result of the request, receives the information on the communication quality necessary for executing the external service from the information processing device 130. Furthermore, the communication unit 121 can receive an inquiry from the information processing device 130 and transmit an answer to the inquiry to the information processing device 130.

The control unit 122 controls the overall external service provider 120, including a process for providing a predetermined external service to the external service destination 110 and a process for utilizing the information on the communication quality necessary for executing the external service acquired from the information processing device 130 for controlling the external service. When the external service destination 110 is a vehicle, examples of the external service include manual remote driving of the vehicle by an operator and autonomous remote driving of the vehicle by an application (APP).

All or part of the external service provider 120 may be configured as an electronic control unit (ECU), typically including a processor such as a central processing unit (CPU), a memory such as a random access memory (RAM), a readable/writable storage medium such as a hard disk drive (HDD) or a solid state drive (SSD), an input/output interface, and the like. In this electronic control unit, all or some of the functions of the communication unit 121 and the control unit 122 described above can be realized by the processor reading and executing the program stored in the memory.

### (3) Information Processing Device

The information processing device 130 is a configuration for communicating with the external service provider 120 and providing the information necessary for executing the external service to the external service provider 120. The information processing device 130 is, for example, a cloud server. The information processing device 130 includes a communication unit 131, an arbitration/acquisition unit 132, and a communication quality map database 133.

The communication unit 131 receives (reception unit) a request regarding communication quality necessary for executing the external service from the external service provider 120, and as a result of the request, transmits (transmission unit) information on the communication quality necessary for executing the external service to the external service provider 120. Further, the communication unit 131 transmits (transmission unit) an inquiry of travel information (described later) necessary for acquiring the information on the communication quality necessary for executing the external service to the external service provider 120, and receives (reception unit) an answer to the inquiry from the external service provider 120.

The arbitration/acquisition unit 132 acquires (acquisition unit), from the communication quality map database 133, the information on the communication quality necessary for executing the external service, based on the request regarding the communication quality necessary for executing the external service received by the communication unit 131. Here, when there is a plurality of requests regarding the communication quality necessary for executing the external service received by the communication unit 131, the arbitration/acquisition unit 132 can perform arbitration (arbitration unit) for selecting one of the requests, based on the category of the external service for each request (vehicle travel related service, vehicle non-travel related service, autonomous driving, manual driving, etc.). For example, arbitration can be performed with the highest priority given to a service related to vehicle safety/security. The information that the arbitration/acquisition unit 132 acquires from the communication quality map database 133 is determined by the content requested by the external service provider 120. The information on the communication quality necessary for executing the external service will be described later.

The communication quality map database 133 is a storage device that stores information, data, etc. relating to communication quality of a communication area in which the external service provider 120 can provide the external service. The information, data, etc. stored in the communication quality map database 133 are acquired from the external service destination 110, the external service provider 120, etc. via the communication unit 131. In this communication quality map database 133, measurement times of the data and the information, latitude/longitude in a global positioning system (GPS), names of communication line service providers, cell identifications (IDs) of a base station that relays communication, etc. are stored statistically as past data in a map form that corresponds to map information of a road. The communication quality map database 133 also stores, as communication quality information, information provided by the base station (received signal strength indicator (RSSI) of the entire band received by the antenna, reference signal received power (RSRP) indicating radio wave strength from the base station, reference signal received quality (RSRQ) serving as a measure of the line congestion state, reference signal signal to noise ratio (RSSNR) indicating the signal quality, etc.), effective speed (upper and lower average/peak throughput), communication delay time, packet loss, etc.

Part of the information processing device 130 can be configured typically as the electronic control unit (ECU) including a processor such as a CPU, a memory such as a RAM, a readable/writable storage medium such as a hard disk drive (HDD) or a solid state drive (SSD), an input/output interface, and the like. This electronic control unit can realize all or some of the functions of the communication unit 131 and the arbitration/acquisition unit 132 described above when the processor reads and executes the program stored in the memory.

### Control

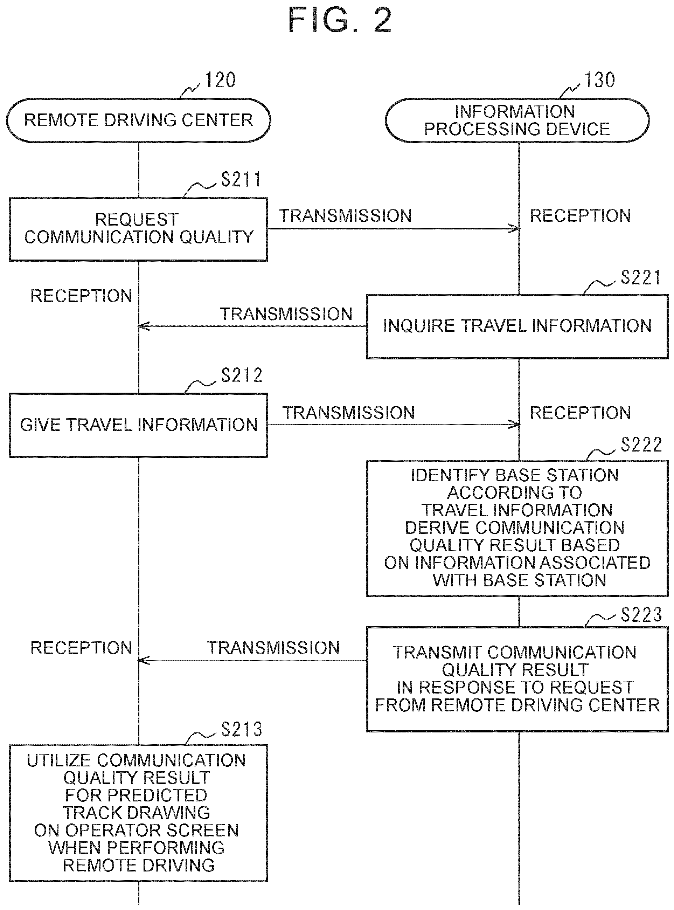

Next, external service control executed by the external service provider 120 and the information processing device 130 according to the present embodiment will be described with further reference to FIGS. 2 to 6.

### (1) First Example of External Service Control

FIG. 2 is a processing sequence for explaining a first example of the external service control executed by the external service provider 120 and the information processing device 130. The first example is an example of the external service control when a remote driving center (operation center), which is the external service provider 120, provides manual remote driving by an operation of an operator to a vehicle, which is the external service destination 110, as the external service.

### Step S211

The remote driving center 120 (external service provider 120) transmits, to the information processing device 130, a request regarding the communication quality necessary for executing the manual remote driving (external service). An example of the request from the remote driving center 120 is a request regarding improvement of the accuracy of the predicted travel track drawn in the camera image in front of the vehicle confirmed by the operator in order to manually perform the remote operation of a vehicle 110 (external service destination 110).

### Step S221

When the information processing device 130 receives a request regarding the communication quality necessary for executing the manual remote driving from the remote driving center 120, the information processing device 130 inquires of the remote driving center 120 for the travel information necessary for acquiring the information regarding the communication quality necessary for executing the manual remote driving. Examples of the travel information to be inquired of the remote driving center 120 include the current position, the destination, the planned travel route, and the speed of the vehicle 110, and the granularity of the information (area where information is required (narrow area or wide area)), etc.

### Step S212

When the remote driving center 120 receives an inquiry of travel information from the information processing device 130, the travel information on the content corresponding to the inquiry is given to the information processing device 130.

### Step S222

When the information processing device 130 receives the answer of the travel information from the remote driving center 120, the information processing device 130 refers to the communication quality map database 133 and identifies one or more base stations that manage the communication area of one or more routes along which the vehicle 110 may travel according to the travel information that has been answered. Then, the information processing device 130 derives, as the communication quality result, information on the communication quality necessary for executing the manual remote driving according to the content requested by the remote driving center 120, based on various data and pieces of information associated with the identified one or more base stations stored in the communication quality map database 133. This communication quality result includes at least the communication quality (probability of occurrence of communication delay and communication interruption according to the granularity of the information, etc.) between the vehicle 110 and the remote driving center 120.

### Step S223

The information processing device 130 transmits to the remote driving center 120 the communication quality result derived in response to the request from the remote driving center 120.

### Step S213

The remote driving center 120 receives the communication quality result from the information processing device 130 and utilizes the received communication quality result to provide remote driving control for the vehicle. In the present embodiment, the communication quality result is utilized for determination to change the mode of the predicted travel track drawn in the camera image in front of the vehicle confirmed by the operator in order to manually perform the remote operation.

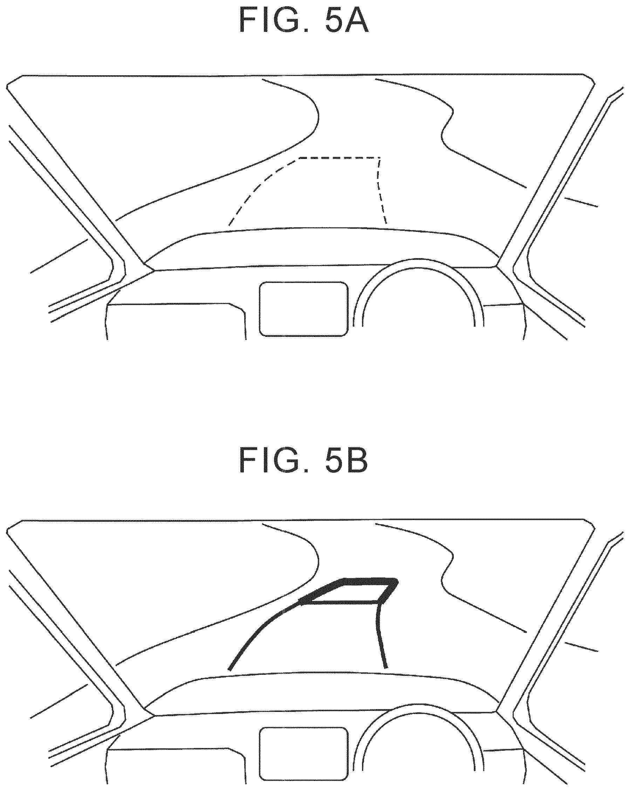

FIGS. 5A and 5B are image diagrams of camera images in front of the vehicle confirmed by the operator for the manual remote operation. In the example of FIGS. 5A and 5B, when the probability of occurrence of delay, interruption, etc. in communication between the vehicle 110 and the remote driving center 120 is low (communication quality is good) on the planned travel route after the vehicle 110 travels for a predetermined time (for example, five seconds), the predicted travel track is normally displayed as a dotted line as shown in FIG. 5A. On the other hand, when the probability of occurrence of delay, interruption, etc. in communication between the vehicle 110 and the remote driving center 120 is high (communication quality is bad) on the planned travel route after the vehicle 110 travels for the predetermined time, the predicted travel track that takes the influences of the delay and the interruption into account is highlighted by a solid line, thick line, etc., and also highlighted stepwise according to the difference in the probability of occurrence as shown in FIG. 5B. It should be noted that the threshold value of the probability of occurrence that causes the display mode of the predicted travel track to differ may be fixedly set in the remote driving center 120 in advance, or may be dynamically set in response to the current state of the vehicle 110 and its surroundings, such as the road width and the number of lanes of the travel route, the speed of the vehicle 110, and the presence/absence of the oncoming vehicle.

As shown in FIGS. 5A and 5B, the display mode of the predicted travel track on the remote operation screen viewed by the operator is caused to differ between the area where the communication quality between the vehicle 110 and the remote driving center 120 is good and the area where the communication quality between the vehicle 110 and the remote driving center 120 is bad. Accordingly, for example, when the display of FIG. 5A is shown, the operator can recognize that the normal manual remote operation should be performed since the display indicates a relatively low probability of occurrence of communication delay, communication interruption, etc. On the other hand, when the display of FIG. 5B is shown, the display indicates a relatively high probability of occurrence of communication delay, communication interruption, etc., and the operator can recognize that the manual remote operation needs to be performed with a feeling of tension so that the operator can respond to a change in a situation. Therefore, according to the remote driving method of the present embodiment, compared to the conventional remote operation method that does not utilize the communication quality result, it can be expected that the operator's operation burden will be reduced while the display of FIG. 5A is being shown.

### (2) Second Example of External Service Control

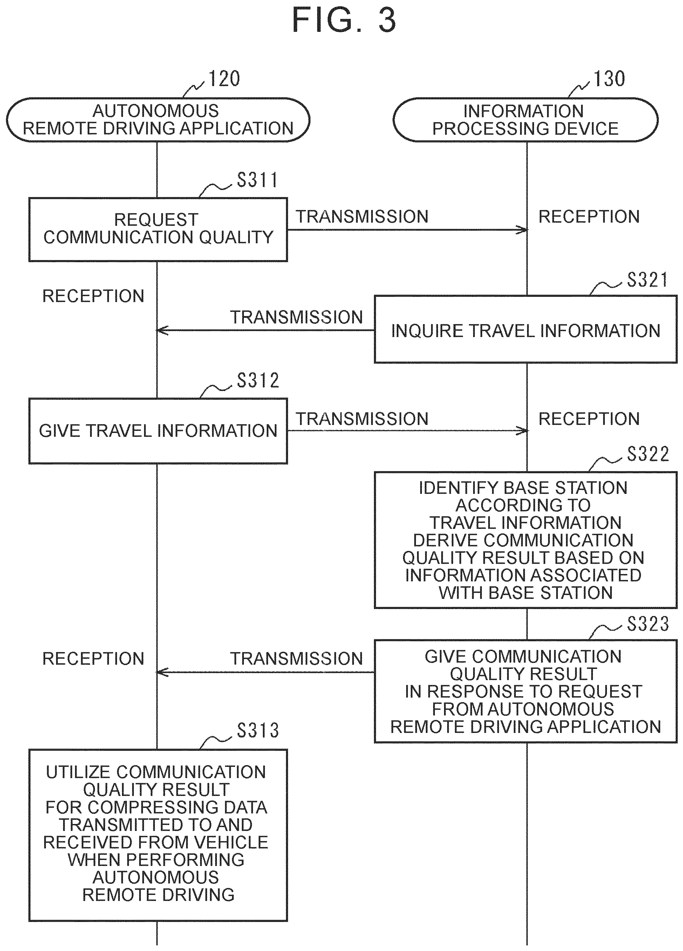

FIG. 3 is a processing sequence for explaining a second example of the external service control executed by the external service provider 120 and the information processing device 130. The second example is an example of the external service control when an autonomous remote driving application server, which is the external service provider 120, provides autonomous remote driving by an application to a vehicle of the external service destination 110 as the external service.

### Step S311

The autonomous remote driving application server 120 (external service provider 120) transmits, to the information processing device 130, a request regarding communication quality necessary for executing the autonomous remote driving (external service). An example of the request from the autonomous remote driving application server 120 is a request regarding compressing or decreasing the amount of data that the autonomous remote driving application server 120 transmits to and receives from the vehicle (external service destination 110).

### Step S321

When the information processing device 130 receives a request regarding the communication quality necessary for executing the autonomous remote driving from the autonomous remote driving application server 120, the information processing device 130 inquires of the autonomous remote driving application server 120 for the travel information necessary for acquiring the information regarding the communication quality necessary for executing the autonomous remote driving. Examples of the travel information to be inquired of the autonomous remote driving application server 120 include the current position, the destination, the planned travel route, and the speed of the vehicle, and the granularity of the information (area where information is required (narrow area or wide area)), etc.

### Step S312

When the autonomous remote driving application server 120 receives an inquiry of travel information from the information processing device 130, the travel information on the content corresponding to the inquiry is given to the information processing device 130.

### Step S322

When the information processing device 130 receives the answer of the travel information from the autonomous remote driving application server 120, the information processing device 130 refers to the communication quality map database 133 and identifies one or more base stations that manage the communication area of one or more routes along which the vehicle 110 may travel according to the travel information that has been answered. Then, the information processing device 130 derives, as the communication quality result, information on the communication quality necessary for executing the autonomous remote driving according to the content requested by the autonomous remote driving application server 120, based on various data and pieces of information associated with the identified one or more base stations stored in the communication quality map database 133. This communication quality result includes at least the communication quality (probability of occurrence of communication delay and communication interruption according to the granularity of the information, etc.) between the vehicle 110 and the autonomous remote driving application server 120.

### Step S323

The information processing device 130 transmits to the autonomous remote driving application server 120 the communication quality result derived in response to the request from the autonomous remote driving application server 120.

### Step S313

The autonomous remote driving application server 120 receives the communication quality result from the information processing device 130 and utilizes the received communication quality result to provide autonomous remote driving control for the vehicle. In the present embodiment, the communication quality result is utilized to determine whether to compress or reduce the amount of data that the autonomous remote driving application server 120 transmits to and receives from the vehicle 110.

Generally, in autonomous remote driving, the autonomous remote driving application server 120 redundantly provides the vehicle 110 with data related to the normal remote driving control (remote control signal), data related to the remote driving control when a failure occurs, and also data related to remote driving control that takes the occurrence of communication delay and interruption into account. Therefore, from the communication quality result, when the probability of occurrence of communication delay, interruption, etc. between the vehicle 110 and the autonomous remote driving application server 120 can be determined to be low (communication quality is good) from the current position of the vehicle 110 until a predetermined time has elapsed, it is possible to compress or omit the redundant data in a period until the predetermined time has elapsed. On the other hand, from the communication quality result, when the probability of occurrence of communication delay, interruption, etc. between the vehicle 110 and the autonomous remote driving application server 120 can be determined to be high (communication quality is bad) from the current position of the vehicle 110 until a predetermined time has elapsed, it is possible to increase the amount of the redundant data transmitted at a period until the predetermined time has elapsed and increase the communication accuracy. As a result, according to the remote driving method of the present embodiment, the amount of data transmitted and received between the autonomous remote driving application server 120 and the vehicle 110 can be expected to be compressed, decreased, or reduced, and the load of the communication line can be expected to be reduced, compared to the conventional remote driving method that does not utilize the communication quality result.

### (3) Third Example of External Service Control

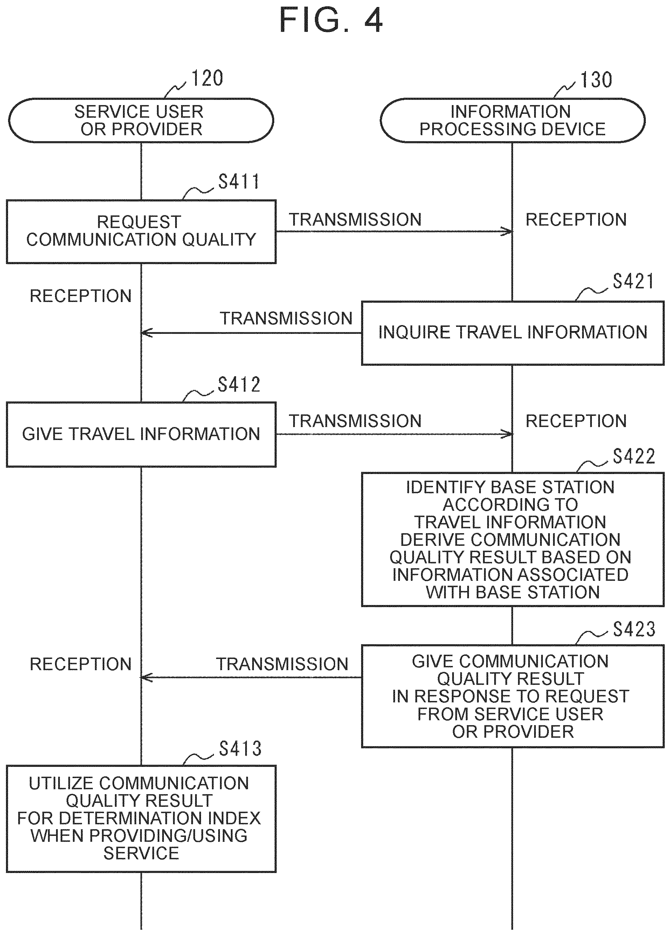

FIG. 4 is a processing sequence for explaining a third example of the external service control executed by the external service provider 120 and the information processing device 130. The third example is an example of the external service control when a user or a provider of the external service, which is the external service provider 120, makes a predetermined determination regarding the external service provided or to be provided to a vehicle of the external service destination 110.

### Step S411

The external service user or provider 120 (external service provider 120) transmits, to the information processing device 130, a request regarding communication quality necessary for executing the external service such as the manual remote driving by the operator operation or the autonomous remote driving by the application. Examples of the request from the external service user or provider 120 include determination of whether the external service is able to be provided, and a request regarding an evaluation when using the external service.

### Step S421

When the information processing device 130 receives a request regarding the communication quality necessary for executing the external service from the external service user or provider 120, the information processing device 130 inquires of the external service user or provider 120 for the travel information necessary for acquiring the information on the communication quality necessary for executing the external service. Examples of the travel information to be inquired of the external service user or provider 120 include the current position, the destination, the planned travel route, and the speed of the vehicle 110 (external service destination 110), the granularity of the information (area where information is required (narrow area or wide area)), etc.

### Step S412

When the external service user or provider 120 receives an inquiry of the travel information from the information processing device 130, the travel information on the content corresponding to the inquiry is given to the information processing device 130.

### Step S422

When the information processing device 130 receives the answer of the travel information from the external service user or provider 120, the information processing device 130 refers to the communication quality map database 133 and identifies one or more base stations that manage the communication area of one or more routes along which the vehicle 110 may travel according to the travel information that has been answered. Then, the information processing device 130 derives, as the communication quality result, information on the communication quality necessary for executing the external service according to the content requested by the external service user or provider 120, based on various data and pieces of information associated with the identified one or more base stations stored in the communication quality map database 133. This communication quality result includes at least the communication quality (probability of occurrence of communication delay and communication interruption according to the granularity of the information, etc.) between the vehicle 110 and the remote driving center or the autonomous remote driving application server that provides the external service.

### Step S423

The information processing device 130 transmits the communication quality result derived in response to a request from the external service user or provider 120 to the external service user or provider 120.

### Step S413

The external service user or provider 120 receives the communication quality result from the information processing device 130 and utilizes the received communication quality result to provide the external service for the vehicle 110. In the present embodiment, the communication quality result is utilized to determine whether the external service is able to be provided and to propose a travel route with a good communication quality when the result regarding the multiple travel routes is obtained, or to generate an information providing request for supplementing a lacking data part of the communication quality map database 133.

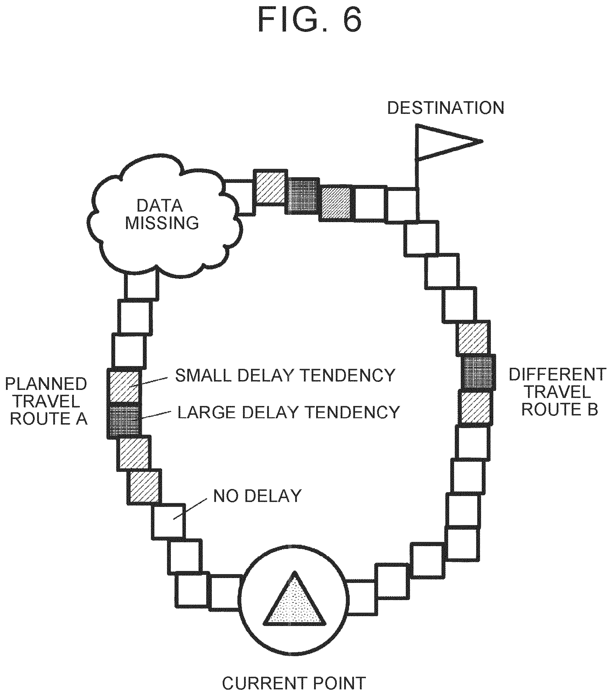

For example, as shown in FIG. 6, for a planned travel route A and a different travel route B different from the planned travel route A, a case is considered where the external service user or provider 120 obtains the communication quality result that the different travel route B is better regarding the comprehensive communication quality from the current point to the destination due to partial data missing on the planned travel route A.

In this case, when the vehicle 110 has already used the external service for the remote driving along the planned travel route A, the external service user or provider 120 can propose driving along the different travel route B in place of the planned travel route A (evaluation when used), and can propose that driving along both of the planned travel route A and the different travel route B is not recommended (whether service is able to be provided), for the remote driving center and the autonomous remote driving application server. As a result, it is possible to provide the vehicle 110 with a travel route with a low probability of occurrence of delay, interruption, etc. in communication.

Further, when the vehicle 110 does not use the external service for the remote driving, it is possible to propose that the vehicle 110 travel along the planned travel route A for the purpose of collecting data of locations where the data is missing on the planned travel route A. As a result, the communication quality map database 133 can be enriched, and an increase in opportunities for providing the external service to the vehicle 110 can be expected. In addition, the external service user or provider 120 can also select an area in which the external service is provided to the vehicle 110, propose a temporary detour route that also takes the congestion state of the communication line into account, make a determination of service standstill, etc., based on the degree of enrichment of the communication quality map database 133.

### Operations and Effects

As described above, when the information processing device 130 according to the embodiment of the present disclosure has received the request regarding the communication quality necessary for executing the external service from the external service provider 120, the information processing device 130 acquires the information on the communication quality necessary for executing the external service from the communication quality map database 133, based on the request regarding the communication quality necessary for executing the received external service. Then, the information processing device 130 transmits the acquired result of the communication quality information to the external service provider 120 in order for the acquired result to be utilized in providing the external service.

According to this control, the operator of the manual remote driving, the user of the external service, or the like can grasp and determine in advance how often communication delay or communication interruption may occur when using the service. As a result, it is expected that dissatisfaction with service interruptions caused by sudden communication delays or communication interruptions will be decreased, and that feeling of security by visualizing the communication quality information will be improved.

Although the embodiment of the present disclosure has been described above, the present disclosure can be applied to an information processing device, a method executed by an information processing device including a processor and a memory, a program for executing this method, a computer-readable non-transitory storage medium that stores a program, etc.

The information processing device and the like of the present disclosure are useful, for example, when an external service provider wants to suitably perform control of an external service destination based on communication quality.

## Claims

1. An information processing device (130) configured to communicate with an external service provider (120), the external service provider (120) being configured to communicate with and provide an external service to an external service destination (110) that is different from the information processing device (130), the information processing device (130) comprising:
a reception unit configured to receive a request regarding communication quality necessary for executing the external service from the external service provider (120), the communication quality necessary being communication quality necessary between the external service provider (120) and the external service destination (110);
an acquisition unit configured to acquire, from a predetermined database (133), information on the communication quality necessary for executing the external service based on the request received by the reception unit; and
a transmission unit configured to transmit the information acquired by the acquisition unit to the external service provider (120).

2. The information processing device (130) according to claim **1,** further comprising an arbitration unit wherein the information processing device (130) is configured to communicate with a plurality of the external service providers (120);
each of the external service providers (120) is configure to i) provide the external service and ii) transmit the request to the information processing device (130);
the external services respectively provided by the external service providers (120) are different from each other;
the reception unit is configured to receive each of the requests from the external service providers (120); and
the arbitration unit is configured to arbitrate, based on categories of the external services, the requests received by the reception unit.

3. The information processing device (130) according to claim **1,** wherein the request is a request regarding communication quality between the external service provider (120) and an external service destination (110) in a predetermined region, the external service destination (110) being configured to receive the external service.

4. The information processing device (130) according to claim **1,** wherein:
the external service is manual remote driving of a vehicle by an operator;
the external service provider (120) is an operation center that instructs the vehicle to be driven remotely; and
the transmission unit is configured to transmit, to the operation center, information used for determining display of a predicted travel track along which the vehicle travels.

5. The information processing device (130) according to claim **1,** wherein:
the external service is autonomous remote driving of a vehicle by an application (APP);
the external service provider (120) is an application server that instructs the vehicle to be driven remotely; and
the transmission unit is configured to transmit, to the application (APP), information used for determining an amount of data transmitted to and received from the vehicle.

6. The information processing device (130) according to claim **1,** wherein:
the external service provider (120) is a user or a provider of the external service; and
the transmission unit is configured to transmit, to the user or the provider, information used for evaluation when the external service is used or for determination of whether the external service is provided.

7. A method executed by a computer of an information processing device (130) that communicates with an external service provider (120), the external service provider (120) being configured to communicate with and provide an external service to an external service destination (110) that is different from the information processing device (130), the method comprising:
receiving a request regarding communication quality necessary for executing the external service from the external service provider (120), the communication quality necessary being communication quality necessary between the external service provider and the external service destination;
acquiring, from a predetermined database, information on the communication quality necessary for executing the external service based on the request; and
transmitting the information to the external service provider (120).

8. A non-transitory storage medium storing instructions that are executable by one or more processors included in a computer of an information processing device (130) that communicates with an external service provider (120) configured to communicate with and provide an external service to an external service destination (110) that is different from the information processing device (130), and that cause the one or more processors to execute functions comprising:
receiving a request regarding communication quality necessary for executing the external service from the external service provider (120), the communication quality necessary being communication quality necessary between the external service provider and the external service destination;
acquiring, from a predetermined database, information on the communication quality necessary for executing the external service based on the request; and
transmitting the information to the external service provider (120).

## Patentansprüche

1. Informationsverarbeitungsvorrichtung (130), die dazu konfiguriert ist, mit einem externen Dienstanbieter (120) zu kommunizieren, wobei der externe Dienstanbieter (120) dazu konfiguriert ist, mit einem externen Dienstziel (110), das sich von der Informationsverarbeitungsvorrichtung (130) unterscheidet, zu kommunizieren und diesem einen externen Dienst bereitzustellen, wobei die Informationsverarbeitungsvorrichtung (130) umfasst:
eine Empfangseinheit, die dazu konfiguriert ist, eine Anfrage bezüglich der für die Ausführung des externen Dienstes erforderlichen Kommunikationsqualität von dem externen Dienstanbieter (120) zu empfangen, wobei die erforderliche Kommunikationsqualität die zwischen dem externen Dienstanbieter (120) und dem externen Dienstziel (110) erforderliche Kommunikationsqualität ist;
eine Erfassungseinheit, die dazu konfiguriert ist, aus einer vorbestimmten Datenbank (133) Informationen über die für die Ausführung des externen Dienstes erforderliche Kommunikationsqualität auf Grundlage der von der Empfangseinheit empfangenen Anfrage zu erfassen; und
eine Übertragungseinheit, die dazu konfiguriert ist, die von der Erfassungseinheit erfassten Informationen an den externen Dienstanbieter (120) zu übertragen.

2. Informationsverarbeitungsvorrichtung (130) nach Anspruch 1, die ferner eine Arbitrationseinheit umfasst, wobei die Informationsverarbeitungsvorrichtung (130) dazu konfiguriert ist, mit einer Mehrzahl von externen Dienstanbietern (120) zu kommunizieren;
jeder der externen Dienstanbieter (120) dazu konfiguriert ist, i) den externen Dienst bereitzustellen und ii) die Anfrage an die Informationsverarbeitungsvorrichtung (130) zu übertragen;
die von den externen Dienstanbietern (120) jeweils bereitgestellten externen Dienste sich voneinander unterscheiden;
die Empfangseinheit dazu konfiguriert ist, jede der Anfragen von den externen Dienstanbietern (120) zu empfangen; und
die Arbitrationseinheit dazu konfiguriert ist, auf Grundlage von Kategorien der externen Dienste die von der Empfangseinheit empfangenen Anfragen zu arbitrieren.

3. Informationsverarbeitungsvorrichtung (130) nach Anspruch 1, wobei die Anfrage eine Anfrage bezüglich der Kommunikationsqualität zwischen dem externen Dienstanbieter (120) und einem externen Dienstziel (110) in einem vorbestimmten Bereich ist, wobei das externe Dienstziel (110) dazu konfiguriert ist, den externen Dienst zu empfangen.

4. Informationsverarbeitungsvorrichtung (130) nach Anspruch 1, wobei:
der externe Dienst das manuelle ferngesteuerte Fahren eines Fahrzeugs durch einen Bediener ist;
der externe Dienstleister (120) eine Einsatzzentrale ist, die das Fahrzeug anweist, ferngesteuert gefahren zu werden; und
die Übertragungseinheit dazu konfiguriert ist, Informationen an die Einsatzzentrale zu übertragen, die für die Bestimmung der Anzeige einer vorhergesagten Fahrstrecke verwendet werden, entlang der das Fahrzeug fährt.

5. Informationsverarbeitungsvorrichtung (130) nach Anspruch 1, wobei:
der externe Dienst das autonome ferngesteuerte Fahren eines Fahrzeugs durch eine Anwendung (APP) ist;
der externe Dienstleister (120) ein Anwendungsserver ist, der das Fahrzeug anweist, ferngesteuert gefahren zu werden; und
die Übertragungseinheit dazu konfiguriert ist, Informationen an die Anwendung (APP) zu übertragen, die für die Bestimmung der Menge an Daten verwendet werden, die an das Fahrzeug übertragen werden und von diesem empfangen werden.

6. Informationsverarbeitungsvorrichtung (130) nach Anspruch 1, wobei:
der externe Dienstanbieter (120) ein Benutzer oder ein Anbieter des externen Dienstes ist; und
die Übertragungseinheit dazu konfiguriert ist, an den Benutzer oder den Anbieter Informationen zu übertragen, die für die Bewertung bei der Verwendung des externen Dienstes oder für die Bestimmung verwendet werden, ob der externe Dienst bereitgestellt wird.

7. Verfahren, das von einem Computer einer Informationsverarbeitungsvorrichtung (130) ausgeführt wird, die mit einem externen Dienstanbieter (120) kommuniziert, wobei der externe Dienstanbieter (120) dazu konfiguriert ist, mit einem externen Dienstziel (110), das sich von der Informationsverarbeitungsvorrichtung (130) unterscheidet, zu kommunizieren und diesem einen externen Dienst bereitzustellen, wobei das Verfahren umfasst:
Empfangen einer Anfrage bezüglich der für die Ausführung des externen Dienstes erforderlichen Kommunikationsqualität von dem externen Dienstanbieter (120), wobei die erforderliche Kommunikationsqualität die zwischen dem externen Dienstanbieter und dem externen Dienstziel erforderliche Kommunikationsqualität ist;
Erfassen aus einer vorbestimmten Datenbank von Informationen über die für die Ausführung des externen Dienstes erforderliche Kommunikationsqualität auf Grundlage der Anfrage; und
Übertragen der Informationen an den externen Dienstanbieter (120).

8. Nicht transitorisches Speichermedium, das Anweisungen speichert, die durch einen oder mehrere Prozessoren ausführbar sind, der/die in einem Computer einer Informationsverarbeitungsvorrichtung (130) enthalten ist/sind, die mit einem externen Dienstanbieter (120) kommuniziert, der dazu konfiguriert ist, mit einem externen Dienstziel (110), das sich von der Informationsverarbeitungsvorrichtung (130) unterscheidet, zu kommunizieren und den einen oder die mehreren Prozessoren zu veranlassen, Funktionen auszuführen, die umfassen:
Empfangen einer Anfrage bezüglich der für die Ausführung des externen Dienstes erforderlichen Kommunikationsqualität von dem externen Dienstanbieter (120), wobei die erforderliche Kommunikationsqualität die zwischen dem externen Dienstanbieter und dem externen Dienstziel erforderliche Kommunikationsqualität ist;
Erfassen aus einer vorbestimmten Datenbank von Informationen über die für die Ausführung des externen Dienstes erforderliche Kommunikationsqualität auf Grundlage der Anfrage; und
Übertragen der Informationen an den externen Dienstanbieter (120).

## Revendications

1. Dispositif de traitement d'informations (130) configuré pour communiquer avec un fournisseur de service externe (120), le fournisseur de service externe (120) étant configuré pour communiquer avec une destination de service externe (110) différente du dispositif de traitement d'informations (130) et pour fournir un service externe à celle-ci, le dispositif de traitement d'informations (130) comprenant :
une unité de réception configurée pour recevoir une demande concernant la qualité de communication nécessaire à l'exécution du service externe à partir du fournisseur de service externe (120), la qualité de communication nécessaire étant la qualité de communication nécessaire entre le fournisseur de service externe (120) et la destination de service externe (110) ;
une unité d'acquisition configurée pour acquérir, à partir d'une base de données (133) prédéterminée, des informations sur la qualité de communication nécessaire à l'exécution du service externe sur la base de la demande reçue par l'unité de réception ; et
une unité de transmission configurée pour transmettre les informations acquises par l'unité d'acquisition au fournisseur de service externe (120).

2. Dispositif de traitement d'informations (130) selon la revendication 1, comprenant en outre une unité d'arbitrage dans lequel le dispositif de traitement d'informations (130) est configuré pour communiquer avec une pluralité de fournisseurs de services externes (120) ;
chacun des fournisseurs de services externes (120) est configuré pour i) fournir le service externe et ii) transmettre la demande au dispositif de traitement d'informations (130) ;
les services externes fournis respectivement par les fournisseurs de services externes (120) sont différents les uns des autres ;
l'unité de réception est configurée pour recevoir chacune des demandes à partir des fournisseurs de services externes (120) ; et
l'unité d'arbitrage est configurée pour arbitrer, sur la base de catégories des services externes, les demandes reçues par l'unité de réception.

3. Dispositif de traitement d'informations (130) selon la revendication 1, dans lequel la demande est une demande concernant la qualité de communication entre le fournisseur de service externe (120) et une destination de service externe (110) dans une région prédéterminée, la destination de service externe (110) étant configurée pour recevoir le service externe.

4. Dispositif de traitement d'informations (130) selon la revendication 1, dans lequel :
le service externe est une conduite à distance manuelle d'un véhicule par un opérateur ;
le fournisseur de service externe (120) est un centre d'opération qui donne des instructions au véhicule à conduire à distance ; et
l'unité de transmission est configurée pour transmettre, au centre d'opération, des informations utilisées pour déterminer l'affichage d'une trajectoire de déplacement prédite le long de laquelle le véhicule se déplace.

5. Dispositif de traitement d'informations (130) selon la revendication 1, dans lequel :
le service externe est une conduite à distance autonome d'un véhicule par une application (APP) ;
le fournisseur de service externe (120) est un serveur d'application qui donne des instructions au véhicule à conduire à distance ; et
l'unité de transmission est configurée pour transmettre, à l'application (APP), des informations utilisées pour déterminer une quantité de données transmises au véhicule et reçues à partir de celui-ci.

6. Dispositif de traitement d'informations (130) selon la revendication 1, dans lequel :
le fournisseur de service externe (120) est un utilisateur ou un fournisseur du service externe ; et
l'unité de transmission est configurée pour transmettre, à l'utilisateur ou au fournisseur, des informations utilisées pour l'évaluation lorsque le service externe est utilisé ou pour déterminer si le service externe est fourni.

7. Procédé exécuté par un ordinateur d'un dispositif de traitement d'informations (130) qui communique avec un fournisseur de service externe (120), le fournisseur de service externe (120) étant configuré pour communiquer avec une destination de service externe (110) qui est différente du dispositif de traitement d'informations (130) et pour fournir un service externe à celle-ci, le procédé comprenant :
la réception d'une demande concernant la qualité de communication nécessaire à l'exécution du service externe à partir du fournisseur de service externe (120), la qualité de communication nécessaire étant la qualité de communication nécessaire entre le fournisseur de service externe et la destination de service externe ;
l'acquisition, à partir d'une base de données prédéterminée, d'informations sur la qualité de communication nécessaire à l'exécution du service externe sur la base de la demande ; et
la transmission des informations au fournisseur de service externe (120).

8. Support de stockage non transitoire stockant des instructions qui sont exécutables par un ou plusieurs processeurs inclus dans un ordinateur d'un dispositif de traitement d'informations (130) qui communique avec un fournisseur de service externe (120) configuré pour communiquer avec une destination de service externe (110) qui est différente du dispositif de traitement d'informations (130) et fournir un service externe à celle-ci, et qui amènent le ou les processeurs à exécuter des fonctions comprenant :
la réception d'une demande concernant la qualité de communication nécessaire à l'exécution du service externe à partir du fournisseur de service externe (120), la qualité de communication nécessaire étant la qualité de communication nécessaire entre le fournisseur de service externe et la destination de service externe ;
l'acquisition, à partir d'une base de données prédéterminée, d'informations sur la qualité de communication nécessaire à l'exécution du service externe sur la base de la demande ; et
la transmission des informations au fournisseur de service externe (120).
